# EUROPÄISCHE PATENTANMELDUNG

(11) **EP 4 141 497 A1**
(43) Veröffentlichungstag der Anmeldung: **01.03.2023**
(21) Anmeldenummer: 22189435.5
(22) Anmeldetag: 09.08.2022
(51) Int. Cl.: G02B 1/00, G01S 7/481, G01S 17/04, G01V 8/12

(54) **OPTOELEKTRONISCHER SENSOR UND VERFAHREN ZUM ERFASSEN VON OBJEKTEN IN EINEM ÜBERWACHUNGSBEREICH**

(30) Priorität: 31.08.2021 DE 102021122418
(71) Anmelder: SICK AG, 79183 Waldkirch (DE)
(72) Erfinder: Menzel, Christoph, 79211 Denzlingen (DE); Ringwald, Siegfried, 79215 Elzach (DE); Waslowski, Kai, 79183 Waldkirch (DE)

(57) **Zusammenfassung**

Es wird ein Optoelektronischer Sensor zur Erfassung eines Objekts in einem Überwachungsbereichs angegeben, der in einem Sendepfad einen Lichtsender und eine dem Lichtsender zugeordnete Sendeoptik zum Aussenden eines Lichtbündels und in einem Empfangspfad einen Lichtempfänger und eine dem Lichtempfänger zugeordnete, um einen Abstand von der Sendeoptik versetzte Empfangsoptik zum Empfangen eines von dem Objekt remittierten Lichtbündels und zum Erzeugen eines Empfangslichtflecks auf dem Lichtempfänger sowie eine Steuer- und Auswertungseinheit aufweist, die dafür ausgebildet ist, ein Empfangssignal des Lichtempfängers auszuwerten. Die Empfangsoptik weist wenigstens ein optisches Metaelement mit einer Metaoberfläche und/oder einem Metamaterial auf und ist derart ausgebildet, dass eine von einer Entfernung des Objekts vom Sensor abhängige Verschiebung des Empfangslichtflecks auf dem Lichtempfänger in einem Nahbereich des Sensors nicht größer als eine Halbwertsbreite des Empfangslichtflecks ist.

## Beschreibung

Die Erfindung betrifft einen optoelektronischen Sensor und ein Verfahren zum Erfassen von Objekten in einem Überwachungsbereich nach dem Oberbegriff von Anspruch 1 beziehungsweise 15.

Optoelektronische Sensoren nutzen in der Regel eine Empfängerlinse, um das zu detektierende Licht auf ihren Lichtempfänger zu fokussieren. Solche Empfängerlinsen haben eine gewisse Baugröße und Brennweite und daraus ergibt sich ein definierter Abstand zwischen Empfängerlinse und Lichtempfänger.

Um mit einem Sensor große Reichweiten zu erzielen, sollte möglichst viel Nutzlicht eingesammelt werden und daher die Empfangsapertur groß sein. Eine große Empfangsöffnung geht aber zwangsläufig auch mit einer großen Bautiefe einher. Man kann in etwa davon ausgehen, dass der Durchmesser der Empfangsapertur der erforderlichen Bautiefe für die Empfangslinse und den Lichtempfänger entspricht. Um die Bautiefe zu verringern, kann eine Empfangsoptik mit kurzer Brennweite verwendet werden

Bei Sensoren, bei denen die optischen Achsen der Sende- und Empfangsoptik nicht koaxial verlaufen, also bei Sensoren mit Pupillenteilung, auch biaxiale Sensoren genannt, kann es aufgrund der durch den Abstand von Sende- und Empfangsoptik hervorgerufenen Parallaxe zu einem Auswandern des Empfangslichtflecks aus dem aktiven Bereich des Lichtempfängers kommen. Dies gilt insbesondere bei einem Arbeitsbereich mit einer großen Entfernung von Nah- und Fernbereich.

Schließlich nimmt auch die empfangene Lichtenergie oder der Empfangspegel annähernd quadratisch mit der Objektentfernung ab. Die Messung ist daher im Nahbereich sehr empfindlich und im Fernbereich sehr unempfindlich.

Die beschriebenen Effekte werden typischerweise zumindest teilweise dadurch vermindert, dass komplexe Optiken mit mehreren Teilbereichen oder zusammengesetzte Optiken verwendet werden. Die EP 0 924 535 B1, EP 3 018 495 B1 oder die EP 3 002 609 B1 der Anmelderin offenbaren beispielsweise derartige Lösungen. Sende- und Empfangsoptik können, wie beispielsweise in der EP 0 735 501 B1 beschrieben, auch koaxial angeordnet werden, wobei ein teildurchlässiger Umlenkspiegel benötigt wird, um die Sendeachse mit der Empfangsachse deckungsgleich zu bekommen. Dadurch ergibt sich ein zusätzlicher Bauraumanspruch von Linsen oder Spiegeln. Beide Lösungen sind daher technisch aufwändig

Die Arbeit von Reshef, Orad, et al. "An optic to replace space and its application towards ultra-thin imaging systems", Nature communications 12.1 (2021): 1-8 befasst sich ohne jeden Zusammenhang mit biaxialen optoelektronischen Sensoren mit sogenannten Metalinsen und Spaceplates. Metalinsen sind extrem dünne optische Elemente mit Linseneffekt, die spezielle Nanostrukturen aufweisen, um Strahlwege zu beeinflussen. Spaceplates wiederum zielen mit ähnlichen Technologien auf den Bereich zwischen den Linsen, denn auch mehrere Metalinsen müssen zunächst wie klassische Linsen einen Abstand zueinander einhalten. Diesen Abstand sollen die Spaceplates verringern, um die Bautiefe einer Optik weiter reduzieren zu können.

Es ist daher Aufgabe der Erfindung, einen optoelektronischen Sensor zur Erfassung eines Objekts in einem Überwachungsbereich weiter zu verbessern.

Diese Aufgabe wird durch einen optoelektronischen Sensor zur Erfassung eines Objekts in einem Überwachungsbereich und ein Verfahren zur Erfassung eines Objekts in einem Überwachungsbereich nach Anspruch 1 beziehungsweise 15 gelöst.

Der Sensor, beispielsweise ein Lichttaster oder ein entfernungsmessender Sensor nach dem Lichtlaufzeitprinzip (TOF-Sensor), weist einen Sendepfad auf, in dem ein Lichtsender über eine Sendeoptik ein Lichtbündel aussendet sowie einen Empfangspfad, in dem das an einem Objekt remittierte Lichtbündel über eine Empfangsoptik auf einen Lichtempfänger abgebildet wird und dort einen Empfangslichtfleck erzeugt, der von dem Lichtempfänger detektiert wird. Das remittierte Lichtbündel kann sowohl durch diffuse Remission als auch durch gerichtete Reflexion entstehen. Empfangsoptik und Sendeoptik sind um einen Abstand zueinander versetzt, beispielsweise gemessen zwischen den optischen Achsen von Empfangsoptik und Sendeoptik.

Aufgrund des Abstands von Empfangsoptik und Sendeoptik ist eine Auftreffposition des Empfangslichtflecks, den das remittierte Lichtbündel auf dem Lichtempfänger erzeugt, von der Entfernung des Objekts vom Sensor abhängig. Da der Empfangslichtfleck in der Regel kein Punkt mit definierten Rändern ist und eine Ausdehnung aufweist, ist im Folgenden als Position des Empfangslichtflecks die Position eines Schwerpunktes einer Intensitätsverteilung des Empfangslichtflecks zu verstehen. Mit sich ändernder Entfernung verschiebt sich der Empfangslichtfleck lateral, also senkrecht zum Empfangspfad beziehungsweise senkrecht zu einer optischen Achse der Empfangsoptik. Während dieser Effekt in Triangulationssensoren zur Entfernungsbestimmung von Objekten genutzt wird, kann er in anderen Sensoren die Messgenauigkeit und Empfindlichkeit der Messung deutlich beeinflussen. Insbesondere kann der Empfangslichtfleck aus dem lichtempfindlichen Bereich des Lichtempfängers wandern, wenn sich das Objekt zu nah am Sensor befindet.

Die Erfindung geht von dem Grundgedanken aus, in dem Empfangspfad ein optisches Metaelement vorzusehen. Das Metaelement wirkt je nach Ausführungsform in verschiedener Weise auf das remittierte Lichtbündel und ersetzt und/oder ergänzt die Empfangsoptik. Das Metaelement weist dafür eine Metaoberfläche und/oder ein Metamaterial auf, d.h. Nanostrukturen, die ganz gezielt bestimmte Wellenfronten des remittierten Lichtbündels formen. Bei einer Metaoberfläche sind solche Nanostrukturen an der Oberfläche vorgesehen, ein Metamaterial erreicht entsprechende Eigenschaften durch die Nanostruktur eines Schichtsystems oder eines Vollkörpers.

Die Erfindung hat den Vorteil, dass die einleitend geschilderten Nachteile eines optoelektronischen Sensors deutlich verbessert werden können. Das betrifft eine Vielzahl von Sensoreigenschaften, die teilweise oder insgesamt adressiert werden. Durch eine verbesserte Empfangsoptik wird die Abhängigkeit der Auftreffposition des Empfangslichtflecks auf dem Lichtempfänger von der Entfernung des Objekts über einen großen Entfernungsbereich derart verringert, dass eine entfernungsabhängige Verschiebung einer Position des Empfangslichtflecks auf dem Lichtempfänger, insbesondere zu einem Mittelpunkt einer lichtempfindlichen Fläche des Lichtempfängers, im Nahbereich nicht größer als eine Halbwertsbreite des Empfangslichtflecks ist, wobei als Halbwertsbreite die Breite des Empfangslichtflecks in Verschiebungsrichtung zu verstehen ist, bei der die Intensität des Empfangslichtflecks auf die Hälfte seines Maximums abgesunken ist.

Dies führt zu einer Verbesserung von Messgenauigkeit und Empfindlichkeit über Nah- und Fernbereich. Gerade im Nahbereich kann wie oben erwähnt der Empfangslichtfleck aus dem aktiven Bereich des Lichtempfängers wandern, wenn sich das Objekt zu nah am Sensor befindet, was durch die erfindungsgemäße Empfangsoptik verhindert wird.

Bevorzugt kann die Empfangsoptik derart ausgebildet sein, dass die entfernungsabhängige Verschiebung einer Position des Empfangslichtflecks auf dem Lichtempfänger, insbesondere zu einem Mittelpunkt einer lichtempfindlichen Fläche des Lichtempfängers, im Nahbereich nicht größer als die Hälfte der Halbwertsbreite des Empfangslichtflecks ist.

Die Empfangsoptik kann auch derart ausgebildet sein, dass die Position des Empfangslichtflecks auf dem Lichtempfänger innerhalb üblicher Toleranzen keine von der Entfernung des Objekts abhängige Verschiebung aufweist.

Das optische Metaelement kann bevorzugt eine Metalinse aufweisen. Dabei wird auf einem flachen, lichtdurchlässigen Trägermaterial eine Metaoberfläche an der Vorder- und/oder Rückseite angeordnet. Die Nanostruktur der Metaoberfläche ist so ausgebildet, dass das remittierte Lichtbündel unter gewünschten Linseneigenschaften geformt, dem remittierten Lichtbündel also ein typischerweise sphärisches oder parabolisches Phasenprofil aufgeprägt wird. Eine Metalinse kann statt eines einfachen Trägermaterials ein Metamaterial aufweisen.

Das optische Metaelement kann bevorzugt eine Spaceplate aufweisen. Ein deutscher Fachbegriff hat sich hierfür noch nicht herausgebildet. Eine Spaceplate ist ein Beispiel für ein Metamaterial, wobei diese nicht primär auf eine Veränderung der Wellenfront entsprechend einem Linseneffekt angelegt ist. Vielmehr soll gleichsam ein längerer Lichtweg auf kleinerem physischem Raum verwirklicht werden, um optische Elemente, insbesondere Metalinsen, näher beieinander anordnen zu können. Eine Spaceplate oder ein sonstiges Metamaterial kann an der Vorder- und/oder Rückseite mit einer Metaoberfläche versehen werden, um die Effekte einer Spaceplate und einer Metalinse zu kombinieren. Für weitere Einzelheiten zu Spaceplates wird ergänzend auf die einleitend genannte Arbeit von Reshef et al. verwiesen.

Das optische Metaelement kann bevorzugt mindestens teilweise die Funktion der Empfangsoptik aufweisen. Diese Funktion ist vorzugsweise, das remittierte Lichtbündel auf den Lichtempfänger zu führen, und zwar derart, dass die Abhängigkeit der Auftreffposition des Empfangslichtflecks auf dem Lichtempfänger von der Entfernung des Objekts über einen großen Entfernungsbereich derart verringert wird, dass eine Verschiebung des Empfangslichtflecks zum Mittelpunkt einer aktiven Fläche des Lichtempfängers nicht größer als eine Halbwertsbreite, besonders bevorzugt nicht größer als die Hälfte der Halbwertsbreite des Empfangslichtflecks ist. Als aktive Fläche des Lichtempfängers ist der Bereich des Lichtempfängers zu verstehen, in dem der Empfangslichtfleck ein Messsignal erzeugen kann, das zur weiteren Signalverarbeitung zur Verfügung steht. Bei eindimensionalen Lichtempfängern wie beispielsweise einer Photodiode oder einer Lawinenphotodiode (APD) ist dies die lichtempfindliche Fläche des Lichtempfängers. Bei zweidimensionalen Matrixdetektoren (Arrays), beispielsweise einer Einzelphotonen-Lawinendioden-Matrix (SPAD-Array), kann die aktive Fläche auch lediglich die Einzelelemente oder Elementgruppen (Region-of-Interest, ROI) des Arrays umfassen, welche von einer Auswerteelektronik des Arrays ausgelesen werden (aktivierte Einzelelemente oder Pixel).

Der Begriff "mindestens teilweise" kann in einem doppelten Sinne verstanden werden, es kann sowohl weitere optische, insbesondere refraktive und/oder diffraktive Elemente der Empfangsoptik geben, als auch das Metaelement weitere Funktionen über solche der Empfangsoptik hinaus übernehmen. Vorzugsweise wird die Empfangsoptik vollständig ersetzt, es sind also keine weiteren optischen Elemente wie Linsen und dergleichen der Empfangsoptik erforderlich.

Die Empfangsoptik kann bevorzugt ein optisches Korrekturelement aufweisen, das eine Abhängigkeit eines Empfangspegels beziehungsweise einer empfangenen Lichtenergie von der Entfernung des Objekts zum Sensor weitestgehend beseitigt. Das optische Korrekturelement kann dazu dienen, einer solchen Idealsituation zumindest nahe zu kommen. Dazu können mindestens zwei zu minimierende Störeffekte genannt werden. Erstens variiert die Auftreffposition in Nahbereich sehr stark mit Änderungen der Objektentfernung, im Fernbereich aber kaum noch. Im Nahbereich verfehlt damit ein zunehmender Anteil den Lichtempfänger, was für einen geringeren Empfangspegel sorgt. Zweitens kann der Empfangspegel im Nahbereich übersteuert und im Fernbereich zu schwach sein. Anzustreben wäre hier ein über den Empfangsbereich im Wesentlichen konstanter Empfangspegel. Beispielsweise kann das optische Korrekturelement den Empfangslichtfleck mit abnehmendem Objektabstand derart vergrößern, so dass der Empfangspegel beziehungsweise die empfangene Lichtenergie im Wesentlichen unabhängig von der Objektentfernung ist.

Wie sogleich erstmals und im Folgenden noch mehrfach zu sehen sein wird, muss das optische Korrekturelement erfindungsgemäß kein separates, zusätzliches Bauteil sein.

Das optische Metaelement kann bevorzugt wenigstens teilweise die Funktion des optischen Korrekturelements aufweisen. Die soeben erläuterte Verminderung der Entfernungsabhängigkeit des Empfangspegels des Lichtempfänger erfolgt dann nicht durch eine refraktive Korrekturlinse oder dergleichen, sondern durch das optische Metaelement. Der Begriff "wenigstens teilweise" hat wieder die mögliche Doppelbedeutung, dass es weitere optische Elemente für eine Verminderung der Entfernungsabhängigkeit des Empfangspegels des Lichtempfänger geben kann und/oder das optische Metaelement weitere Funktionen übernehmen kann.

Das optische Metaelement kann bevorzugt eine Brennweite aufweisen, die mit dem Einfallswinkel variiert, insbesondere monoton. Die Nanostrukturen des optischen Metaelements werden sinnvollerweise nicht strukturell, sondern funktional beschrieben. Es kommt in der Praxis nicht darauf an, welche konkrete Nanostruktur geschaffen wird, sondern dass die gewünschten optischen Eigenschaften erzielt werden. Dabei gibt es auch vielfältigste unterschiedliche Umsetzungsmöglichkeiten, also Nanostrukturen, die eine angestrebte optische Wirkung gleichermaßen erfüllen. Der Einfallswinkel korrespondiert wegen des Abstandes von Sende- und Empfangspfad mit der Objektentfernung. Eine klassische Linse würde für das einfallende, remittierte Lichtbündel nur eine einheitliche Brennweite aufweisen, was dann aber zu den diskutierten Störeffekten führt. Eine mit dem Einfallswinkel variierende Brennweite sorgt damit für eine Verminderung der Entfernungsabhängigkeit des Empfangslichtflecks auf dem Lichtempfänger. Die Brennweite hängt vorzugsweise monoton vom Einfallswinkel ab, so dass auf das remittierte Lichtbündel bei steilerem Einfallswinkel, also kleinerer Entfernung zwischen Sensor und Objekt, eine stärkere Brennweite wirkt oder umgekehrt. Die Richtung zunehmender oder abnehmender Brennweite dieser vorzugsweise monotonen Beziehung hängt von der Auslegung des Sensors ab. Konkret kann eine derart variable Brennweite die Auftreffposition durch stärkere oder schwächere Umlenkung korrigieren, gemäß dem oben unter erstens diskutierten Störeffekt.

Das optische Metaelement kann bevorzugt einen prismatischen Effekt aufweisen, der mit dem Einfallswinkel variiert, insbesondere monoton. Die Nanostrukturen des optischen Metaelements werden sinnvollerweise nicht strukturell, sondern funktional beschrieben. Es kommt in der Praxis nicht darauf an, welche konkrete Nanostruktur geschaffen wird, sondern dass die gewünschten optischen Eigenschaften erzielt werden. Dabei gibt es auch vielfältigste unterschiedliche Umsetzungsmöglichkeiten, also Nanostrukturen, die eine angestrebte optische Wirkung gleichermaßen erfüllen. Der Einfallswinkel korrespondiert wie oben beschrieben wegen des Abstandes von Sende- und Empfangspfad mit der Objektentfernung. Eine mit dem Einfallswinkel variierende prismatische Wirkung sorgt damit für eine Verminderung der Entfernungsabhängigkeit des Empfangslichtflecks auf dem Lichtempfänger. Die prismatische Wirkung hängt vorzugsweise monoton vom Einfallswinkel ab, so dass auf das remittierte Lichtbündel bei steilerem Einfallswinkel, also kleinerer Entfernung zwischen Sensor und Objekt, eine stärkere prismatische Wirkung ausgeübt wird oder umgekehrt. Die Richtung zunehmender oder abnehmender prismatischer Wirkung dieser vorzugsweise monotonen Beziehung hängt von der Auslegung des Sensors ab. Konkret kann eine derart variable prismatische Wirkung die Auftreffposition durch stärkere oder schwächere Umlenkung korrigieren, gemäß dem oben unter erstens diskutierten Störeffekt.

Das optische Metaelement kann bevorzugt das remittierte Lichtbündel für alle über eine Reichweite des Sensors auftretenden Einfallswinkel derart auf den Lichtempfänger abbilden, dass eine Übersteuerung des Lichtempfängers vermieden wird. Besonders bevorzugt bleibt ein Empfangspegel des Lichtempfängers innerhalb üblicher Toleranzen konstant. Das Metaelement übernimmt damit eine mögliche Funktion des optischen Korrekturelements. Die Designanforderung an die Auslegung der Nanostrukturen des optischen Metaelements ist hier, dass für alle Einfallswinkel, die mit der Objektentfernung korrespondieren, eine Abbildung des remittierten Lichtbündels in die Lichtempfängerebene derart erreicht wird, dass eine Übersteuerung des Lichtempfängers vermieden wird. Besonders bevorzugt ist die Entfernungsabhängigkeit der Empfangslichtfleckgröße in der Lichtempfängerebene derart, dass ein Empfangspegel des Lichtempfängers auch bei variierendem Objektabstand im Wesentlichen konstant bleibt. Dies lässt sich insbesondere mit einer Brennweite erreichen, die vom Einfallswinkel abhängt. Alle Einfallswinkel meint dabei denjenigen Winkelbereich, der Objektabständen in einem Messbereich oder innerhalb einer Reichweite des Sensors entspricht.

Das Metaelement kann bevorzugt ein erstes Teilelement für eine Verminderung der Entfernungsabhängigkeit der Empfangslichtfleckposition von einer Entfernung des Objekts und ein zweites Teilelement für eine wenigstens teilweise Vergleichmäßigung eines Empfangspegels bei unterschiedlichen Entfernungen des Objekts aufweisen. Die beiden oben unter erstens und zweitens diskutierten Wirkungen eines optischen Korrekturelements werden hier auf zwei Teilelemente verteilt. Das erste Teilelement sorgt für eine Verminderung beziehungsweise Beseitigung der Entfernungsabhängigkeit der Empfangslichtfleckposition auf dem Lichtempfänger, das zweite Teilelement für eine entfernungsabhängige Fokussierung derart, dass eine Übersteuerung des Lichtempfängers vermieden wird. Besonders bevorzugt ist die Entfernungsabhängigkeit der Empfangslichtfleckgröße in der Lichtempfängerebene derart, dass ein Empfangspegel des Lichtempfängers auch bei variierendem Objektabstand im Wesentlichen konstant bleibt. Die Teilelemente sind in Lichtstrahlrichtung hintereinander angeordnet und können auf gegenüberliegenden Seiten eines gemeinsamen Substrats angeordnet sein. Ein Vorteil der Anordnung der Teilelemente auf einem Substrat ist die inhärent gegebene Präzision der Ausrichtung der optischen Grenzflächen, die bei getrennten optischen Bauteilen nur mit viel Aufwand in der Justage beziehungsweise Positionierung zu erreichen ist.

Das Metaelement kann bevorzugt ein erstes Teilelement zur Abbildung von aus dem Fernbereich des Senors remittierten Lichtbündeln auf den Lichtempfänger und ein zweites Teilelement zur Abbildung von aus dem Nahereich des Sensors remittierten Lichtbündeln auf den Lichtempfänger aufweisen. Die Teilbereiche können dabei so dimensioniert sein, dass das erste Teilelement eine größere Apertur aufweist als das zweite Teilelement. Damit kann aus dem Fernbereich mehr vom Objekt remittiertes Licht auf den Lichtempfänger gelangen als aus dem Nahbereich, womit einer Übersteuerung des Lichtempfängers durch von Objekten im Nahbereich remittiertem Licht entgegengewirkt werden kann. Eine derartige Ausgestaltung des Metaelements kann daher zur einer Vergleichmäßigung des Empfangspegels über den Empfangsbereich des Sensors beitragen.

Das optische Metaelement kann bevorzugt wenigstens teilweise die Funktion sowohl der Empfangsoptik als auch des optischen Korrekturelements aufweisen. Das optische Metaelement erzeugt damit in Funktion der Empfangsoptik den Empfangslichtfleck auf dem Lichtempfänger und leistet zugleich eine optische Korrektur, um zumindest einen der oben genannten Störeffekte zu abzumildern. Der Begriff "wenigstens teilweise" hat auch hier den doppelten Sinn, dass Empfangsoptik und/oder optisches Korrekturelement weitere optische Elemente aufweisen können sowie, dass das optische Metaelement noch mehr Funktionen abdecken kann. Besonders bevorzugt ist das optische Metaelement Empfangsoptik und optisches Korrekturelement in einem, es gibt dann im Empfangspfad keine weiteren optischen Elemente.

Das optische Metaelement kann bevorzugt derart ausgeführt sein, dass nur Licht mit einer oder mehreren vorgegebenen Wellenlängen oder Wellenlängenbereichen auf den Lichtempfänger abgebildet wird. Das optische Metaelement wirkt dann wie ein optisches Filter, beispielsweise ein Linienfilter oder ein Bandpassfilter. Damit kann ein Fremdlichteintrag auf den Lichtempfänger verhindert und die Empfindlichkeit und Robustheit des Sensors erhöht werden.

Die Sendeoptik kann bevorzugt ein zweites optisches Metaelement aufweisen. In dieser Ausführungsform ist auch im Sendepfad ein optisches Metaelement vorgesehen, dass eine beispielsweise refraktive herkömmliche Sendeoptik ersetzt oder ergänzt. Die Funktion der Sendeoptik ist die Erzeugung eines abgegrenzten Lichtbündels beispielsweise durch Kollimieren. Alternativ zu einer Ausführungsform mit einem zweiten optischen Metaelement kann der Sendepfad eine refraktive Sendelinse oder dergleichen aufweisen. Besonders bevorzugt sind das erste optische Metaelement und das zweite optische Metaelement als gemeinsames Metaelement ausgebildet. Das gemeinsame Metaelement kann dann die gesamte Optik darstellen und als Sendeoptik, Empfangsoptik und optisches Korrekturelement zugleich fungieren. Alternativ sind ergänzende zusätzliche optische Elemente vorstellbar.

Der Sensor kann bevorzugt als entfernungsmessendes System nach dem Lichtlaufzeitprinzip oder auch als einfache Lichtschranke ausgebildet sein

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: ein Blockschaltbild eines optoelektronischen Sensors;
- Fig. 2: eine Prinzipdarstellung zur Erläuterung der Entfernungsabhängigkeit von Empfangslichtfleckposition und -größe in einem optoelektronischen Sensor mit Pupillenteilung;
- Fig. 3: eine schematische Darstellung der Sende- und Empfangspfade eines erfindungsgemäßen optischen Sensors mit einem optischen Metaelement;
- Fig. 4: eine schematische Darstellung der Sende- und Empfangspfade eines erfindungsgemäßen optischen Sensors mit zwei in Lichtstrahlrichtung hintereinander angeordneten Teilelementen eines optischen Metaelements;
- Fig. 5: eine schematische Darstellung der Sende- und Empfangspfade eines erfindungsgemäßen optischen Sensors mit zwei in Lichtstrahlrichtung nebeneinander angeordneten Teilelementen eines optischen Metaelements;

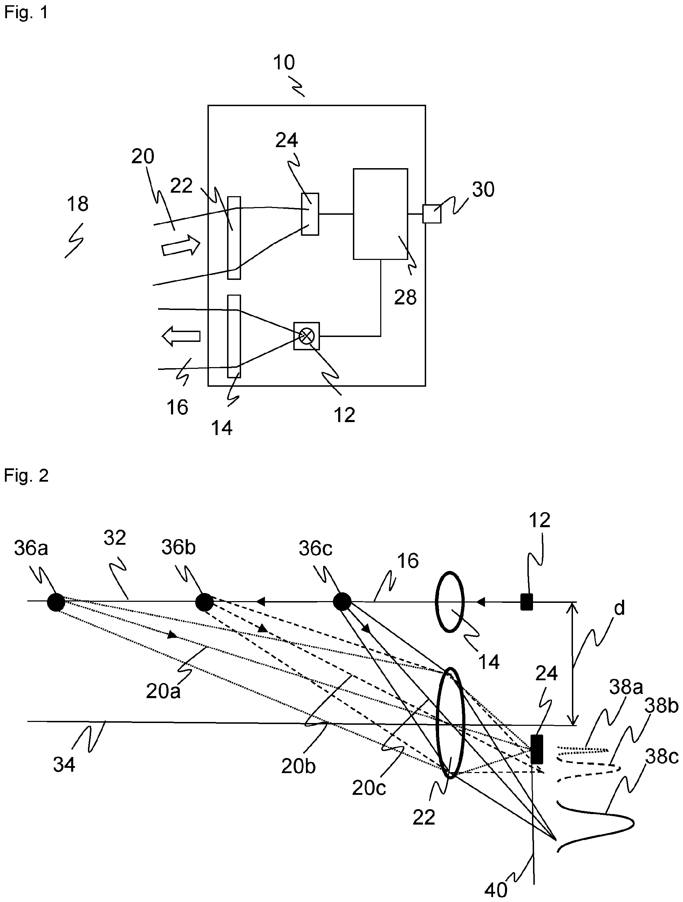

Figur 1 zeigt eine schematische Schnittdarstellung eines optoelektronischen Sensors 10 mit Pupillenteilung. Ein Lichtsender 12 sendet über eine strahlformende Sendeoptik 14 ein Lichtbündel 16 in einen Überwachungsbereich 18 aus. Fällt das Lichtbündel 16 in dem Überwachungsbereich 18 auf ein Objekt, so gelangt ein Teil davon als remittiertes Lichtbündel 20 zurück zu dem Sensor 10. Das remittierte Lichtbündel 20 wird von einer Empfangsoptik 22 auf einen Lichtempfänger 24 geführt, der daraus ein elektrisches Empfangssignal erzeugt. Sendeoptik 14 und Empfangsoptik 22 sind rein schematisch als Kästchen dargestellt, um ihren konkreten Aufbau vorerst offen zu lassen. Erfindungsgemäß sind sie wenigstens teilweise durch ein optisches Metaelement verwirklicht, wie später noch erläutert wird.

Der Auftreffort des remittierten Lichtbündels 20 beziehungsweise des davon erzeugten Empfangslichtflecks auf dem Lichtempfänger 24 hängt wegen des Abstands d zwischen Sendeoptik 14 und Empfangsoptik 22 von der Entfernung des angetasteten Objekts ab, an dem das remittierte Lichtbündel 20 zurückgeworfen wird. Der Versatz von Sendeoptik 14 und Empfangsoptik 22 kann insbesondere dazu führen, dass der Empfangslichtfleck von einem fernen Objekt auf dem Lichtempfänger 24 registriert und von einem nahen Objekt nicht auf den Lichtempfänger 24 trifft, wie später noch ausführlicher erläutert wird. Eine Steuer- und Auswertungseinheit 28 ist mit dem Lichtsender 12 und dem Lichtempfänger 24 verbunden, um aus den elektrischen Empfangssignalen beispielsweise eine Anwesenheit und/oder eine Entfernung eines Objekts im Überwachungsbereich 18 zu bestimmen.

Der Lichtempfänger 24 in Figur 1 kann ein eindimensionaler Lichtempfänger mit einem einzigen Lichtempfangselement, eine Empfängerzeile mit in einer Zeile angeordneten Lichtempfangselementen oder Pixeln oder eine Matrix aus Lichtempfangselementen oder Pixeln sein.

Figur 2 zeigt eine Prinzipdarstellung der Entfernungsabhängigkeit von Empfangslichtfleckposition und -größe in einem optoelektronischen Sensor mit Pupillenteilung. Dazu sind die sendeseitige optische Achse 32 und die empfangsseitige optische Achse 34 zusätzlich eingezeichnet. Sendeoptik 14 und Empfangsoptik 22 sind vorerst noch als refraktive Linsen dargestellt, um verschiedene entfernungsabhängige Störeffekte zu illustrieren, die dann erfindungsgemäß durch das schon angesprochene und noch genauer zu erläuternde optische Metaelement verbessert werden.

Die Systemempfindlichkeit eines optoelektronischen Sensors 10 mit Pupillenteilung hängt zunächst von verschiedenen Eigenschaften des Sensors 10 selbst ab, wie Lichtsender 14, Brennweiten von Sendeoptik 14 und Empfangsoptik 22 oder dem Abstand d zwischen Lichtsender 14 und Lichtempfänger 24. Sie variiert darüber hinaus mit der Entfernung des jeweiligen Objekts. In Figur 2 ist ein Objekt beispielhaft in drei verschiedenen Abständen gezeigt, ein Objekt 36a in einem Fernbereich, ein Objekt 36b in einem Mittenbereich und ein Objekt 36c in einem Nahbereich. Was dies in absoluten Entfernungen bedeutet, kann sehr unterschiedlich sein und wird von der Auslegung des Sensors 10 und dem abzudeckenden Entfernungsmessbereich beziehungsweise der Reichweite festgelegt. Das remittierte Lichtbündel 20a des Objekts 36a im Fernbereich, das remittierte Lichtbündel 20b des Objekts 36b im Mittenbereich und das remittierte Lichtbündel 20c des Objekts 36c im Nahbereich treffen jeweils an unterschiedlichen Positionen auf den Lichtempfänger 24, beziehungsweise verfehlen diesen sogar, wie im Falle des Lichtbündel 20c, das vom Objekts 36c im Nahbereich remittiert wurde. Die Positionsabhängigkeit beziehungsweise Verschiebung resultiert aus dem Abstand d zwischen Lichtsender 14 und Lichtempfänger 24 und kann in Triangulationssensoren zur Entfernungsbestimmung verwendet werden. Im vorliegenden Fall jedoch führt diese Verschiebung dazu, dass das Objekt 36c im Nahbereich nicht mehr vom Lichtempfänger 24 detektiert werden kann, da der Empfangslichtfleck den Lichtempfänger 24 beziehungsweise dessen aktive Fläche nicht trifft. Auch im Mittenbereich kann es bereits zu einer eingeschränkten Empfindlichkeit kommen, wenn der Empfangslichtfleck den Lichtempfänger 24 beziehungsweise dessen aktive Fläche nur teilweise trifft.

Zusätzlich sind schematisch Intensitätsprofile 38a, 38b, 38c der Empfangslichtflecken entlang der Verschiebungsrichtung in einer durch den Lichtempfänger 24 definierten Ebene 40 dargestellt. Die Empfangsoptik 22 ist hier so ausgelegt, dass bei einem fernen Objekt 36a beziehungsweise bei einem remittierten Lichtbündel 20a aus dem Unendlichen eine im Wesentlichen scharfe Abbildung auf dem Lichtempfänger 24 erzielt wird. Der Empfangslichtfleck für das Objekt 36a im Fernbereich ist demnach beugungsbegrenzt und insbesondere nahezu punktförmig. Gemäß der Abbildungsgleichung 1/f = 1/g+1/b, mit f Brennweite, g Gegenstandsweite und b Bildweite, werden die Abbildungen mit abnehmender Entfernung unscharf und die Intensitätsprofile 38b, 38c der Empfangslichtflecken recht groß für das remittierte Lichtbündel 20b von einem Objekt 36b aus dem Mittenbereich oder gar das remittierte Lichtbündel 20c von einem Objekt 36c aus dem Nahbereich. Im Mitten- und Nahbereich steigt zudem die Intensität des Empfangslichts, hier schematisch angedeutet durch den größeren Flächeninhalt der Intensitätsprofile 38b, 38c im Vergleich zum Intensitätsprofil 38a, des Empfangslichtflecks des Objekts 38a aus dem Fernbereich.

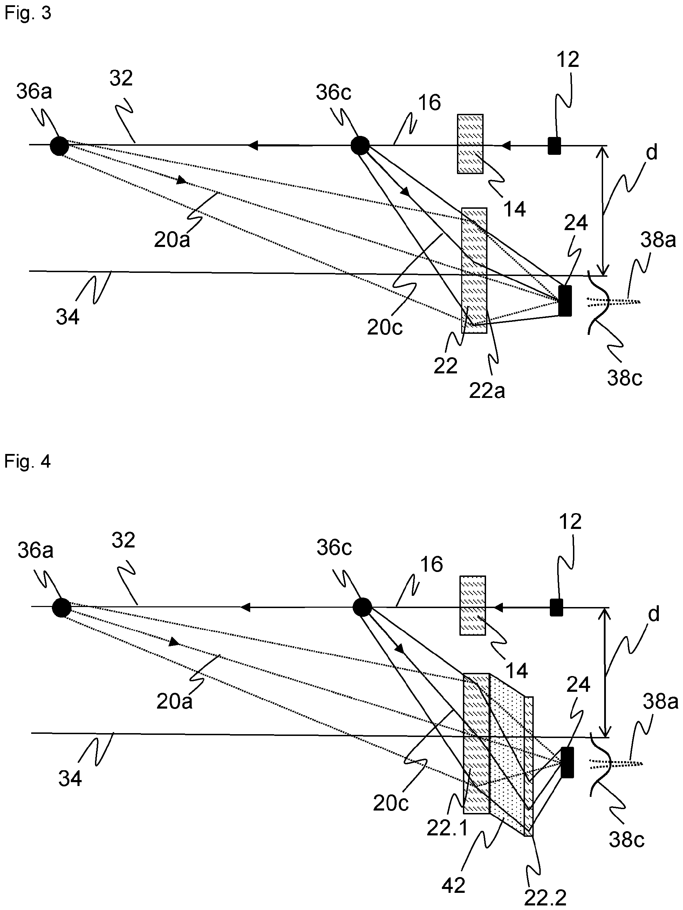

Figur 3 zeigt eine schematische Darstellung der Sende- und Empfangspfade eines erfindungsgemäßen optischen Sensors mit einem optischen Metaelement 22 im Empfangspfad, das die Position des Empfangslichtflecks korrigiert. Das optische Metaelement 22 trägt das Bezugszeichen der Empfangsoptik der Figuren 1 und 2, die es je nach Ausführungsform bildet, ersetzt oder ergänzt. Es erfüllt vorzugsweise zugleich die genannten Korrekturfunktionen. Das optische Metaelement oder ein weiteres optisches Metaelement kann ebenso die Sendeoptik 14 bilden, ersetzen oder ergänzen und ist deshalb in seinem unteren Teil mit deren Bezugszeichen versehen. Das Design des optischen Metaelements kann so gewählt werden, dass Lichtsender 12 und Lichtempfänger 24 auf einer gemeinsamen Elektronikkarte angeordnet sind.

Das optische Metaelement 22 weist eine Metaoberfläche 22a auf und ist insbesondere als Metalinse aufgebaut ("flat optics"). Alternativ oder ergänzend ist denkbar, dass bereits der Körper oder Träger des optischen Metaelements 22 ein Metamaterial aufweist, insbesondere das optische Metaelement 22 eine Spaceplate ist.

Herkömmliche optische Komponenten wie Linsen, Wellenplatten oder Hologramme beruhen auf der Lichtausbreitung über Entfernungen, die viel größer als die Wellenlänge des Lichtbündels 16, 22 sind, um Wellenfronten zu formen. Auf diese Weise werden entlang des Strahlengangs nach und nach wesentliche Änderungen der Amplitude, Phase oder Polarisation von Lichtwellen akkumuliert. Eine Metaoberfläche 22a hingegen weist Strukturen auf, die als Miniatur-Anisotrop-Lichtstreuer oder (senkrecht angeordnete) Wellenleiter oder Resonatoren beziehungsweise optische Antennen aufgefasst werden können. Diese Strukturen haben Abmessungen und Abstände im Nanometerbereich, viel kleiner als die Wellenlänge des Lichtbündels 16, 22. Dadurch formt die Metaoberfläche 22a nach dem Huygens-Prinzip optische Wellenfronten in beliebige Formen mit Subwellenlängenauflösung, indem die Nanostrukturen räumliche Variationen in der optischen Reaktion der Lichtstreuer einführen. Damit lassen sich Effekte einer herkömmlichen Linse nachempfinden, aber auch Funktionalitäten von anderen optischen Komponenten, wie beispielsweise von Strahlteilern, Polarisatoren oder Beugungsgittern. Die Besonderheit ist die hohe Flexibilität, durch angepasste Nanostrukturen eine gewünschte Ausgangswellenfront und damit verschiedenste optische Effekt zu erreichen. Je nach Wellenlängenbereich werden Materialien mit einem geeigneten Transmissionsverhalten verwendet, beispielsweise Titandioxid, Siliziumnitrid oder Galliumphosphid im sichtbaren und Aluminiumnitrid im ultravioletten Spektralbereich sowie Chalkogenid-Legierungen im mittleren und Silizium im langwelligen Infrarotbereich.

Diese Überlegungen zu einer Metaoberfläche lassen sich auf ein Metamaterial übertragen, bei dem das Innere beziehungsweise der Träger entsprechende Nanostrukturen aufweist, wobei dies mit einer Metaoberfläche kombinierbar ist. Damit können insbesondere Spaceplates realisiert werden, die einen Lichtweg effektiv auf kleinerem Raum komprimieren, wozu nochmals ergänzend auf die einleitend zitierte Arbeit von Reshef et al. verwiesen wird. Das optische Metaelement 22 kann folglich eine Meta- oder Nanostruktur im Inneren und/oder auf der Vorder- und/oder Rückseite aufweisen.

Die Eigenschaften des optischen Metaelements 22 werden nun vorzugsweise so gewählt, dass die Brennweite eine Funktion des Einfallswinkels wird. Dazu wird die Metaoberfläche 22a entsprechend strukturiert und/oder für das optische Metaelement 22 ein Metamaterial gewählt, es insbesondere als Spaceplate ausgebildet. Mit einer Spaceplate ist die gewünschte Brennweitenabhängigkeit vom Einfallswinkel gut realisierbar, beispielsweise durch Silizium- oder Siliziumoxid-Schichten als anisotropes Element zur einfallswinkelabhängigen Brennweitenvarianz

Der Einfallswinkel korrespondiert, wie zuvor dargelegt, mit der Objektentfernung. Eine weitere Designanforderung kann sein, dass für alle Objektabstände eine Abbildung in die Empfängerebene des Lichtempfängers 24 derart erfolgt, dass der Lichtempfänger nicht übersteuert beziehungsweise der Empfangspegel möglichst konstant ist. Das Ergebnis ist im gezeigten Ausführungsbeispiel eine abhängig von der Objektentfernung auf dem Lichtempfänger 24 variierende Empfangslichtfleckgröße. Dadurch kann die Intensität des vom Objekt remittierten Lichtbündels auf dem Lichtempfänger so eingestellt werden, dass eine Übersteuerung des Lichtempfängers vermieden wird. Im Ausführungsbeispiel bedeutet dies, dass der Durchmesser des Empfangslichtflecks für aus dem Nahbereich remittierte Lichtbündel größer ist als für aus dem Fernbereich remittierte Lichtbündel.

Figur 4 zeigt eine schematische Darstellung ähnlich Figur 3, in der das optische Metaelement 22 in zwei in Lichtstrahlrichtung hintereinander angeordnete Teilelemente 22₁, 22₂ aufgeteilt ist. Beide Teilelemente können Metamaterial und/oder vorder- und/oder rückseitig eine Metaoberfläche aufweisen. So lassen sich die Abbildungs- und Korrekturfunktionen verteilen. In diesem Beispiel wird der Durchmesser des Empfangslichtflecks durch das erste Teilelement 22₁ und die Position des Empfangslichtflecks durch das zweite Teilelement 22₂ mit einer ortsaufgelösten Übertragungsfunktion geleistet. Die verschiedenen Funktionen des optischen Metaelements 22, sei es als Metamaterial und/oder Metaoberfläche, insbesondere eine vom Einfallswinkel abhängige Brennweitenanpassung, können in dieser oder vergleichbarer Weise auf zwei oder mehr Teilelemente aufgeteilt werden. Dabei können Funktionen getrennt und jeweils einem Teilelement zugewiesen werden und/oder die Teilelemente einander in der Erfüllung derselben Funktion ergänzen. Das erste Teilelement 22₁ und das zweite Teilelement 22₂ können beispielsweise auf gegenüberliegenden Seiten eines gemeinsamen Substrats 42 angeordnet sein. Um Fertigungsprozesse zu vereinfachen, kann das Substrat 42 mit einer typischen Dicke von 2 mm bis 10 mm durch aufeinander kleben von zwei oder mehr Schichten aufgebaut werden. Alternativ kann das Metaelement 22 auch als oberflächenstrukturierter Volumenkörper oder oberflächenstrukturierte Platte ausgebildet sein.

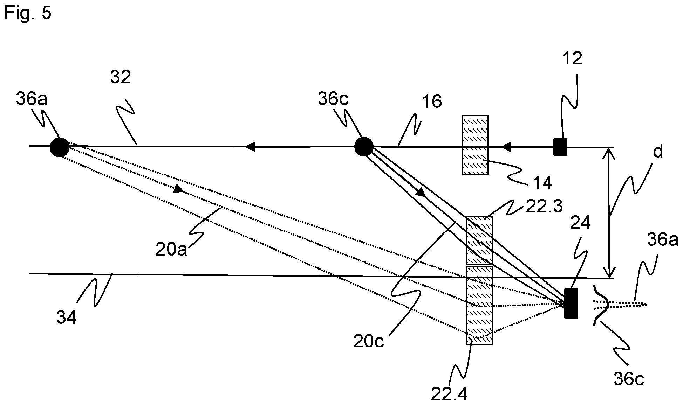

Figur 5 zeigt eine schematische Darstellung der Sende- und Empfangspfade einer weiteren Ausführungsform eines erfindungsgemäßen optischen Sensors, in der das optische Metaelement 22 in zwei in Lichtstrahlrichtung nebeneinander angeordnete Teilelemente 22₃, 22₄ aufgeteilt ist. Beide Teilelemente können wie in den bereits gezeigten Ausführungsbeispielen Metamaterial und/oder vorder- und/oder rückseitig eine Metaoberfläche aufweisen. In diesem Beispiel wirkt das erste Teilelement 22₃ auf Lichtbündel, die von Objekten im Nahbereich remittiert wurden, das zweite Teilelement 22₄ auf Lichtbündel, die von Objekten im Fernbereich remittiert wurden. Das erste Teilelement 22₃ ist vorteilhafterweise näher an der sendeseitigen optischen Achse 32 angeordnet als das zweite Teilelement 22₄. Dies vermeidet insbesondere im Nahbereich ein extremes Auswandern des Empfangslichtflecks und sehr steile Einfallswinkel des Lichtbündels 20c auf den Lichtempfänger 24. Über die Aperturen der Teilelemente 22₃, 22₄ lässt sich die Intensität des auf den Lichtempfänger 24 gelangenden, von den Objekten 36a, 36c remittierten Lichtes beeinflussen. Da im Nahbereich entsprechend des geringeren Abstands quadratisch mehr Lichtleistung auf die Apertur fällt, kann diese im Nahbereich entsprechend kleiner gewählt werden als im Fernbereich, so dass sich die Intensität auf dem Lichtempfänger 24 und somit der Empfangspegel vergleichmäßigt.

## Patentansprüche

1. Optoelektronischer Sensor (10) zur Erfassung eines Objekts (36) in einem Überwachungsbereichs (18), der in einem Sendepfad einen Lichtsender (12) und eine dem Lichtsender (12) zugeordnete Sendeoptik (14) zum Aussenden eines Lichtbündels (16) und in einem Empfangspfad einen Lichtempfänger (24) und eine dem Lichtempfänger (24) zugeordnete, um einen Abstand (d) von der Sendeoptik (14) versetzte Empfangsoptik (22) zum Empfangen eines von dem Objekt (36) remittierten Lichtbündels (20) und zum Erzeugen eines Empfangslichtflecks (38) auf dem Lichtempfänger sowie eine Steuer- und Auswertungseinheit (28) aufweist, die dafür ausgebildet ist, ein Empfangssignal des Lichtempfängers (24) auszuwerten, **dadurch gekennzeichnet, dass** die Empfangsoptik (22) wenigstens ein optisches Metaelement (22) mit einer Metaoberfläche (22a) und/oder einem Metamaterial aufweist und die Empfangsoptik (22) derart ausgebildet ist, dass eine von einer Entfernung des Objekts (36) vom Sensor (10) abhängige Verschiebung des Empfangslichtflecks (38) auf dem Lichtempfänger (24) in einem Nahbereich des Sensors (10) nicht größer als eine Halbwertsbreite des Empfangslichtflecks (38) ist.

2. Sensor (10) nach Anspruch 1, **dadurch gekennzeichnet, dass** die Empfangsoptik (22) derart ausgebildet ist, dass die von der Entfernung des Objekts (36) vom Sensor (10) abhängige Verschiebung des Empfangslichtflecks (38) auf dem Lichtempfänger im Nahbereich des Sensors (10) nicht größer als eine halbe Halbwertsbreite des Empfangslichtflecks (38) ist.

3. Sensor (10) nach Anspruch 1 oder 2, **dadurch gekennzeichnet, dass** die Empfangsoptik (22) derart ausgebildet ist, dass der Empfangslichtfleck (38) keine von der Entfernung des Objekts (36) vom Sensor (10) abhängige Verschiebung aufweist.

4. Sensor (10) nach einem der vorhergehenden Ansprüche, **dadurch gekennzeichnet, dass** das optische Metaelement (22) wenigstens eine Metalinse aufweist.

5. Sensor (10) nach einem der vorhergehenden Ansprüche, **dadurch gekennzeichnet, dass** das optische Metaelement (22) wenigstens eine Spaceplate aufweist.

6. Sensor (10) nach einem der vorhergehenden Ansprüche, **dadurch gekennzeichnet, dass** die Empfangsoptik (22) wenigstens eine refraktive und/oder diffraktive Optik aufweist.

7. Sensor (10) nach einem der vorhergehenden Ansprüche, **dadurch gekennzeichnet, dass** das optische Metaelement (22) mindestens teilweise die Funktion der Empfangsoptik aufweist.

8. Sensor (10) nach einem der vorhergehenden Ansprüche, **dadurch gekennzeichnet, dass** der Sensor (10) ein optisches Korrekturelement (22) in dem Empfangspfad aufweist, das eine Abhängigkeit eines Empfangspegels des Lichtempfängers (24) von der Entfernung des Objekts (36) vom Sensor (10) reduziert.

9. Sensor (10) nach Anspruch 8, **dadurch gekennzeichnet, dass** das optische Metaelement (22) wenigstens teilweise die Funktion sowohl der Empfangsoptik als auch des optischen Korrekturelements aufweist.

10. Sensor (10) nach einem der vorhergehenden Ansprüche, **dadurch gekennzeichnet, dass** die Empfangsoptik (22) das remittierte Lichtbündel (20) für alle über eine Reichweite des Sensors (10) auftretenden Einfallswinkel derart auf den Lichtempfänger (24) abbildet, dass eine Übersteuerung des Lichtempfängers (24) vermieden wird.

11. Sensor (10) nach einem der vorhergehenden Ansprüche, **dadurch gekennzeichnet, dass** die Empfangsoptik (22) das remittierte Lichtbündel (20) für alle über eine Reichweite des Sensors (10) auftretenden Einfallswinkel derart auf den Lichtempfänger (24) abbildet, dass ein Empfangspegel des Lichtempfängers (24) konstant bleibt.

12. Sensor (10) nach einem der vorhergehenden Ansprüche, **dadurch gekennzeichnet, dass** das Metaelement (22) ein erstes Teilelement (22₁) für eine Verminderung einer Entfernungsabhängigkeit der Empfangslichtfleckposition von einer Entfernung des Objekts (36) und ein zweites Teilelement (22₂) für eine wenigstens teilweise Vergleichmäßigung eines Empfangspegels bei unterschiedlichen Entfernungen des Objekts (36) aufweisen

13. Sensor (10) nach einem der vorhergehenden Ansprüche, **dadurch gekennzeichnet, dass** die Sendeoptik (14) ein zweites optisches Metaelement aufweist, wobei das optische Metaelement und das zweite optische Metaelement insbesondere als gemeinsames Metaelement (22) ausgebildet sind.

14. Sensor (10) nach einem der vorhergehenden Ansprüche, **dadurch gekennzeichnet, dass** der Sensor (10) als Lichtschranke oder als entfernungsmessender Sensor nach dem Lichtlaufzeitprinzip ausgebildet ist

15. Verfahren zur Erfassung eines Objekts (36) in einem Überwachungsbereich (18), wobei mit einem Lichtsender (12) ein Lichtbündel (16) ausgesandt wird, ein von dem Objekt (36) remittiertes Lichtbündel (20) von einer um einen Abstand (d) zum Lichtsender (12) versetzt angeordneten Empfangsoptik (22) auf einen Lichtempfänger abgebildet (24) wird und durch den Lichtempfänger (24) ein Empfangssignal erzeugt wird,
**dadurch gekennzeichnet, dass** die Empfangsoptik (22) wenigstens ein optisches Metaelement (22) mit einer Metaoberfläche (22a) und/oder einem Metamaterial aufweist und die Empfangsoptik (22) derart ausgebildet ist, dass eine von einer Entfernung des Objekts (36) vom Sensor (10) abhängige Verschiebung des Empfangslichtflecks (38) auf dem Lichtempfänger (24) derart reduziert wird, dass die Verschiebung in einem Nahbereich des Sensors (10) nicht größer als eine Halbwertsbreite des Empfangslichtflecks (38) ist.
